# EUROPÄISCHE PATENTSCHRIFT

(11) **EP 3 676 522 B1**
(45) Veröffentlichungstag und Bekanntmachung des Hinweises auf die Patenterteilung: **17.03.2021**
(21) Anmeldenummer: 18778855.9
(22) Anmeldetag: 19.09.2018
(51) Int. Cl.: F16K 37/00, F16K 3/08, F16K 31/06

(54) **MOTORISCH ANGETRIEBENES AXIAL-STROMREGELVENTIL**
MOTOR-DRIVEN AXIAL-FLOW CONTROL VALVE
RÉGULATEUR DE DÉBIT AXIAL ENTRAÎNÉ PAR MOTEUR

(43) Veröffentlichungstag der Anmeldung: 08.07.2020
(73) Patentinhaber: Oblamatik AG, 7000 Chur (CH)
(72) Erfinder: KNUPFER, Daniel, 7203 Trimmis (CH); KNUPFER, Thomas, 7000 Chur (CH); OBRIST, Roland, 7412 Scharans (CH)
(74) Vertreter: Troesch Scheidegger Werner AG
(86) Internationale Anmeldenummer: PCT/EP2018/075352
(87) Internationale Veröffentlichungsnummer: WO 2020/057736

(56) Entgegenhaltungen:
- DE-U1-202016 106 030
- US-A- 4 596 377
- US-A- 4 901 977
- US-A1- 2016 356 026
- US-A1- 2017 370 754

## Beschreibung

Die vorliegende Erfindung betrifft ein motorisch angetriebenes Axial-Stromregelventil. Unter «axial» soll im Rahmen der vorliegenden Erfindung verstanden werden, dass die Strömungsrichtung eines durchfliessenden Fluids im betreffenden Stromregelventil hauptsächlich geradlinig und ohne wesentliche Umlenkung in der Achse zwischen zwei gegenüberliegenden Anschlüssen, d.h. einem Einlass und einem Auslass verläuft. Zudem ist das Axial-Stromregelventil motorisch angetrieben, d.h. in seinem Durchfluss durch einen auf ein Regelteil wirkenden Motorantrieb verstellbar.

An dieser Stelle soll angemerkt werden, dass unter den Begriff «Regelventil» auch Steuerventile fallen, bzw. ein Regelventil auch ein Steuerventil ist, und ein Regelteil auch ein Steuerteil ist. Ob mit einem Ventil auf einen bestimmten Sollwert eines Parameters geregelt wird, oder ob lediglich seine Öffnungsweite gesteuert (eingestellt) wird, hängt primär vom System ab, in welches das Ventil eingebunden ist.

Ein gattungsgemässes, motorisch angetriebenes Axial-Stromregelventil ist in der EP 2 391 839 B1 beschrieben. Dieses umfasst ein Ventilgehäuse mit einem Durchgang zwischen einem Einlass und einem Auslass und einem Durchfluss-Regelteil, wobei der Strömungsweg im Wesentlichen axial ausgerichtet ist, und wobei hier der Motorantrieb innen beim Durchfluss-Regelteil liegt. Ein Ventilschaft im Durchfluss-Regelteil ist durch den Motorantrieb axial verfahrbar und damit der Durchfluss in einem Ventilsitz veränderbar.

Eine andere Ausführungsform eines motorisch angetriebenen Axial-Stromregelventils ist beschrieben in US 10,036,480 B2. Hier ist der Motorantrieb für einen in einem axialen Käfig verschiebbaren Ventilkolben aussen am Ventilgehäuse angeordnet. Der Motorantrieb wirkt über eine drehbare oder lineare Quer-Spindel auf den Schaft des axial verschiebbaren Ventilkolbens mittels eines Zahnstangengetriebes oder Gelenks

DE202016106030U1 offenbart ein motorisch angetriebenes Axial-Stromregelventil nach dem Oberbegriff des Anspruchs 1.

Die aus dem Stand der Technik bekannten Ausführungsformen von motorisch angetriebenen Axial-Stromregelventilen sind in ihrem inneren Aufbau und auf der Antriebsseite kompliziert und in ihrer Bauweise als Ganzes nicht sehr kompakt.

Aufgabe der vorliegenden Erfindung ist es, ein alternatives motorisch angetriebenes Axial-Stromregelventil zur Verfügung zu stellen.

Diese Aufgabe wird durch ein motorisch angetriebenes Axial-Stromregelventil mit den Merkmalen des Anspruchs 1 gelöst.

Die vorliegende Erfindung bezieht sich zudem auf Verwendungen eines erfindungsgemässen, motorisch angetriebenen Axial-Stromregelventils.

Bevorzugte erfindungsgemässe Ausführungsformen und Varianten ergeben sich aus den jeweils abhängigen Ansprüchen.

Ein motorisch angetriebenes Axial-Stromregelventil gemäss der vorliegenden Erfindung umfasst einen Ventilkörper mit einem Einlass und einem gegenüberliegenden Auslass und einem dazwischen liegenden Durchgang mit im Wesentlichen axialer Ausrichtung zum Einlass und zum Auslass sowie ein im Durchgang angeordnetes Durchfluss-Regelteil mit Wirkverbindung zu einem Motorantrieb in einem am Ventilkörper anliegenden Schaltgehäuse, wobei das Durchfluss-Regelteil durch zwei radial angeordnete und aufeinander liegende Scheiben mit je mindestens einer Durchlassöffnung gebildet wird, von denen die eine Scheibe eine im Ventilkörper fest angeordnete Statorscheibe ist und die andere Scheibe axial drehbar auf der Statorscheibe liegt, und die drehbare Scheibe mit einer im Durchgang axial angeordneten, in ihrem Hohlraum durchströmbaren und axial drehbaren Hülse im Eingriff steht, wobei diese Hülse an ihrem äusseren Umfang mit dem Motorantrieb wirkverbunden ist.

Der Ausdruck «anliegend» betreffend das Schaltgehäuse bedeutet, dass das Schaltgehäuse mit dem Ventilkörper mechanisch fest verbunden ist, auf lösbare oder nicht lösbare Art, z.B. durch eine Schraub-Befestigung, oder dass es daran angeformt oder einstückig zusammen mit dem Ventilkörper hergestellt ist.

Stromregelventile mit motorisch betätigter Rotorscheibe im Zusammenspiel mit einer Statorscheibe sind zwar bekannt, z.B. aus der EP 1 767 840 B1 oder aus der WO 2016/131472 A1. Bei diesen Ventilkonstruktionen erfolgt aber der Antrieb über eine Spindel, was vom Platz her bedingt, dass der Abfluss des Wassers aus dem Durchfluss-Regelteil eine Umlenkung um 90 Winkelgrade erfahren muss. Dies erhöht erstens den Strömungswiderstand, und zweitens entsteht auf der dem Abfluss abgewandten Rückseite zunächst ein stagnierender Raum, welcher zum totraumfreien Durchspülen ein zusätzliches, nach hinten gerichtetes Fenster in der Kartuschenwand notwendig macht.

Im Gegensatz dazu ist das erfindungsgemässe, motorisch angetriebene Axial-Stromregelventil durch seine neuartige Antriebs-Konzeption kompakter und ermöglicht einen weitgehend geraden axialen Durchfluss ohne stagnierende Zonen. Durch diese strömungsgünstige Gestaltung, die weniger Druckverlust verursacht, sind mit dem erfindungsgemässen Stromregelventil hohe maximale Durchflüsse möglich («high flow»). Zudem entstehen im erfindungsgemässen Stromregelventil aufgrund der geraden Strömung weniger Geräusche. Eine Wirkverbindung zwischen dem Motorantrieb und dem äusseren Umfang der axial drehbaren Hülse kann bei der vorliegenden Erfindung auf verschiedene Arten realisiert sein. Denkbar wäre zum Beispiel ein Schneckengetriebe.

Nach der Erfindung umfasst der Motorantrieb des erfindungsgemässen, motorisch angetriebenen Axial-Stromregelventils einen Elektromotor mit einem Getriebe und einer Antriebswelle, auf welcher ein Antriebsrad sitzt, das mit dem äusseren Umfang der axial drehbaren Hülse wirkverbunden ist.

Die Antriebswelle ist dabei bevorzugt achsenparallel zur axial drehbaren Hülse ausgerichtet.

Nach der Erfindung ist das Antriebsrad als Zahnrad ausgebildet, und die axial drehbare Hülse weist an ihrem äusseren Umfang eine Verzahnung auf.

Nach der Erfindung greift das als Zahnrad ausgebildete Antriebsrad in die Verzahnung am äusseren Umfang der axial drehbaren Hülse ein, und ist so wirkverbunden mit der axial drehbaren Hülse.

Der Elektromotor des motorisch angetriebenen Axial-Stromregelventils ist bevorzugt ein Schrittmotor oder ein Gleichstrommotor.

Beim erfindungsgemässen, motorisch angetriebenen Axial-Stromregelventil umfasst mindestens eine der zwei radial angeordneten Scheiben vorzugsweise ein Material, das ausgewählt ist aus der Gruppe bestehend aus Keramik, Metall und technischem Kunststoff. Bevorzugt ist diese mindestens eine Scheibe aus einem solchen Material hergestellt, zum Beispiel aus Keramik.

Unter Metallen sind sowohl reine Metalle als auch Metall-Legierungen zu verstehen. Eine Scheibe aus Metall könnte zudem oberflächenbeschichtet sein. Ein geeigneter technischer Kunststoff andererseits muss sich durch gute technische Eigenschaften wie hohe Festigkeit, Formstabilität, Wärmeformbeständigkeit, Verschleissfestigkeit und gute Gleiteigenschaften auszeichnen. Solche Kunststoffe sind in der Regel mit Zusatzstoffen verstärkt. Als Polymere kommen z.B. Hochtemperatur-Polyamide in Frage.

Beim motorisch angetriebenen Axial-Stromregelventil gemäss der vorliegenden Erfindung ist die axial drehbare Hülse im Ventilkörper an ihrem äusseren Umfang bevorzugt mit Dichtungen versehen. Dabei handelt es sich vorzugsweise um Gleitringdichtungen für eine gute Drehbeweglichkeit. Diese Dichtungen dienen dem Zweck, das Innere des Ventilkörpers gegen die Antriebsseite am äusseren Umfang der axial drehbaren Hülse abzudichten.

Statt direkt gegen die Innenwand des Ventilkörpers kann die axial drehbare Hülse gegebenenfalls auch gegen eine fest eingepasste Hülse im Ventilkörper abgedichtet sein. In einer solchen fest eingepassten Hülse können die axial drehbare Hülse und die beiden Scheiben des Durchfluss-Regelteils untergebracht sein. Eine fest eingepasste Hülse muss am Ort der Antriebs-Wirkverbindung eine Aussparung aufweisen.

Aufgrund der Abdichtung ist es beim erfindungsgemässen, motorisch angetriebenen Axial-Stromregelventil von Vorteil, wenn der Einlass auf der Seite der Statorscheibe und der Auslass auf der Seite der axial drehbaren Hülse ist. Auf diese Weise sind die Dichtungen der axial drehbaren Hülse weniger hohem Druck ausgesetzt. Rein prinzipiell kann das Ventil aber auch in umgekehrter Durchflussrichtung betrieben werden (mit vertauschtem Einlass und Auslass).

Im motorisch angetriebenen Axial-Stromregelventil ist gemäss der vorliegenden Erfindung bei bevorzugten Ausführungsformen im Ventilkörper mindestens ein Sensor eingebaut. Dies erlaubt es, Messungen im Betrieb durchzuführen und erfasste Daten auszuwerten.

Der mindestens eine Sensor ist insbesondere ausgewählt aus der Gruppe der Durchflusssensoren, Temperatursensoren, Drucksensoren und Hygienesensoren. Als Durchflusssensor ist bevorzugt ein Turbinen-Durchflussmesser ausgewählt. Unter Hygienesensoren sind solche Sensoren zu verstehen, welche Eigenschaften messen, die mit der Wasserqualität zusammenhängen (z.B. physikalisch und/oder chemisch und/oder biochemisch).

Beim motorisch angetriebenen Axial-Stromregelventil gemäss der Erfindung sind Durchfluss- und/oder Temperatursensoren bevorzugt beim Einlass und Drucksensoren und/oder Hygienesensoren bevorzugt beim Auslass des Ventilkörpers eingebaut.

Am Schaltgehäuse des erfindungsgemässen, motorisch angetriebenen Axial-Stromregelventils sind vorzugsweise Schnittstellen-Anschlüsse zur elektrischen Stromversorgung und zur Ansteuerung des Motorantriebs sowie zur Erfassung von Messsignalen von Sensoren und zur Datenübertragung vorhanden. Solche Schnittstellen-Anschlüsse sind bevorzugt mit einer Kontrolleinheit zur Steuerung und Datenauswertung verbindbar.

Die genannte Kontrolleinheit kann ausserhalb des Schaltgehäuses, z.B. in einem Schaltschrank oder in einer Messwarte, platziert sein. Möglich ist es aber auch, die Kontrolleinheit als interne Mess- und Regelelektronik im Schaltgehäuse des erfindungsgemässen Axial-Stromregelventils auf einer Printplatte (Abkürzung PCB) zu integrieren, welche auch die Schnittstellen-Anschlüsse umfasst.

Zur Erfindung gehören auch Verwendungen des erfindungsgemässen, motorisch angetriebenen Axial-Stromregelventils für Fluide generell, d.h. für Flüssigkeiten, Dämpfe und Gase. Bevorzugte Verwendungen finden sich in der Wasserversorgung (Trinkwasser, Brauchwasser, Warmwasser), in sanitären Anlagen oder in Heizungs- und Kühlsystemen von Gebäuden, insbesondere als Steuerventil, als Durchfluss-Regulierventil, als Wasserzähler, als Zirkulationsventil, oder als Sicherheits-Absperrventil, letzteres an einem Haus- oder Stockwerk-Wasseranschluss mit Überwachung durch eine Kontrolleinheit auf Vorkommnisse wie ungewöhnlichen Wasserverbrauch oder eventuelle Leckagen. Für letztere Verwendung kann das motorisch angetriebene Axial-Stromregelventil neben einem Durchflusssensor beim Einlass einen Drucksensor beim Auslass aufweisen. Zudem kann bei einem Vorkommnis eine Meldung von der Kontrolleinheit an eine Zentrale oder an eine App eines Benutzers gesendet werden, z.B. an das Smartphone eines Benutzers. Bei einer Leckage kann ein Absperren des Wasseranschlusses durch automatisches Schliessen des motorisch angetriebenen Axial-Stromregelventils erfolgen.

Im Folgenden wird die Erfindung anhand von schematischen Figuren näher erläutert, welche beispielhafte Ausführungsformen darstellen, die den Umfang der vorliegenden Erfindung nicht einschränken. Dabei zeigt:
- Fig. 1: ein erfindungsgemässes motorisch angetriebenes Axial-Stromregelventil in einer 3D-Aussenansicht
- Fig. 2: ein erfindungsgemässes motorisch angetriebenes Axial-Stromregelventil in einer 3D-Aussenansicht mit zusätzlichem Sensor-Einbauort
- Fig. 3: ein erfindungsgemässes motorisch angetriebenes Axial-Stromregelventil in einer axial geschnittenen 3D-Ansicht
- Fig. 4: ein erfindungsgemässes motorisch angetriebenes Axial-Stromregelventil in einer axial geschnittenen 3D-Ansicht mit zusätzlichem Sensor-Einbauort
- Fig. 5: ein erfindungsgemässes motorisch angetriebenes Axial-Stromregelventil in einem axialen Längsschnitt
- Fig. 6: ein erfindungsgemässes motorisch angetriebenes Axial-Stromregelventil in einem axialen Längsschnitt mit zusätzlichem Sensor-Einbauort

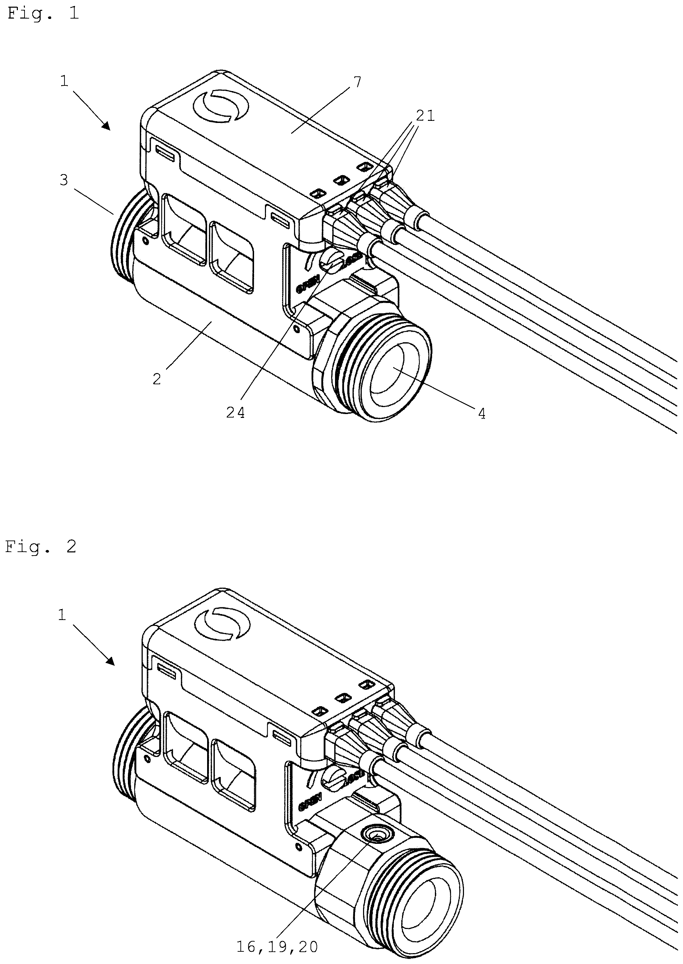

Die Figur 1 zeigt eine Aussenansicht eines erfindungsgemässen, motorisch angetriebenen Axial-Stromregelventils 1 in einer perspektivischen dreidimensionalen Darstellung. Von aussen zu sehen sind der Ventilkörper 2, dessen Einlass 3 und der dem Einlass 3 gegenüberliegende Auslass 4, sowie das am Ventilkörper 2 anliegende Schaltgehäuse 7. Im Ventilkörper 2 befindet sich der im Wesentlichen axial ausgerichtete Durchgang zwischen dem Einlass 3 und dem Auslass 4. Zu sehen sind überdies eine mechanische Stellungsanzeige 24 sowie Schnittstellen-Anschlüsse 21 mit eingesteckten Kabeln, von denen eines zur elektrischen Stromversorgung und zur Ansteuerung des Motorantriebs dient, ein zweites zwecks Übertragung von Messdaten zu einer nicht dargestellten externen Kontrolleinheit führt, und am dritten ein zusätzlicher externer Sensor (z.B. Temperatur eines Zirkulations-Wasserkreislaufs) oder ein Sensor vom zusätzlichen Sensor-Einbauort des Ventils (vgl. Erläuterungen zu Fig. 2) angeschlossen sein kann. Für den Betrieb als reines Steuerventil würde das eine Kabel zur elektrischen Stromversorgung und zur Ansteuerung des Motorantriebs genügen. Im Fall einer zusätzlichen Datenübertragung kann statt einer drahtgebundenen Schnittstelle (z.B. LAN) auch ein drahtlos funktionierendes Modul eingebaut sein, wie WLAN oder Bluetooth®, um über eine solche Schnittstelle eine drahtlose Kommunikation zu ermöglichen.

Die Figur 2 entspricht der Figur 1, mit dem Unterschied, dass das motorisch angetriebene Axial-Stromregelventil 1 in der Figur 2 einen zusätzlichen Sensor-Einbauort 16,19,20 aufweist, der für einen Drucksensor 19 und/oder einen Hygienesensor 20 oder weitere Sensoren 16 geeignet ist. Die übrigen Komponenten entsprechen der Figur 1 und sind deshalb in der Figur 2 nicht nochmals beschriftet.

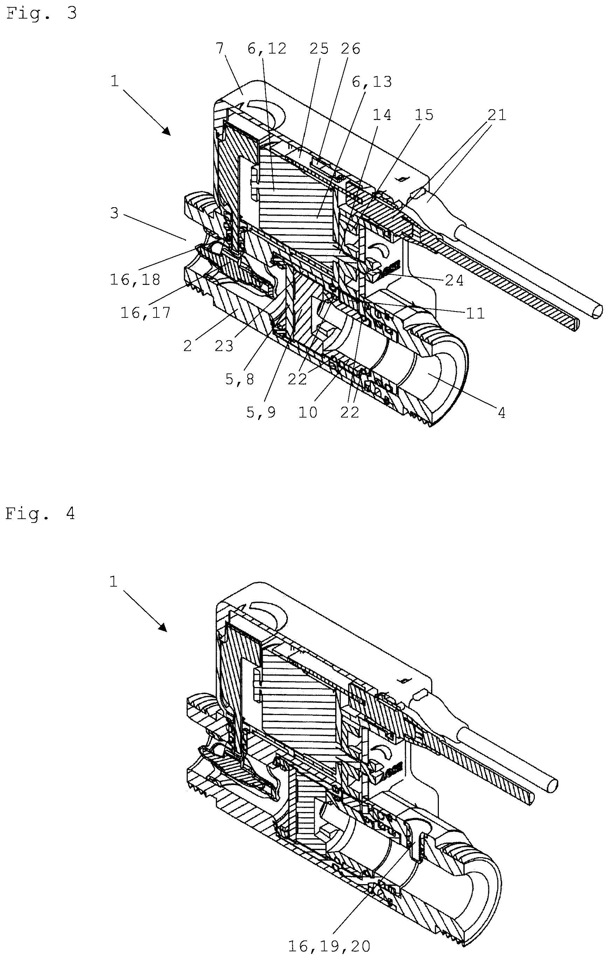

Die Figur 3 ist mit der Figur 1 vergleichbar und zeigt ein motorisch angetriebenes Axial-Stromregelventil 1 in einer axial geschnittenen, dreidimensionalen Darstellung. Im aufgeschnittenen Inneren sieht man zusätzlich zu den bei Figur 1 bereits erläuterten Komponenten folgende erfindungswesentlichen oder bevorzugten Merkmale:
Ein Durchflussregelteil 5, gebildet durch zwei radial angeordnete und aufeinander liegende Scheiben 8,9 mit je mindestens einer Durchlassöffnung, nämlich eine im Ventilkörper 2 fest angeordnete Statorscheibe 8 und eine axial drehbare Scheibe 9. Durch eine Drehbewegung wird in Abhängigkeit des Winkels der Überlappungsgrad der je mindestens einen Durchlassöffnung der beiden Scheiben zwischen einer geschlossenen und einer ganz offenen Position verändert und dadurch die Öffnungsweite des Ventils bzw. der freie Strömungsquerschnitt variiert. Die drehbare Scheibe 9 steht mit einer im Durchgang axial angeordneten, in ihrem Hohlraum durchströmbaren und axial drehbaren Hülse 10 im Eingriff und dreht sich dadurch mechanisch gekoppelt simultan mit letzterer. Die Hülse 10 weist in der dargestellten bevorzugten Ausführungsform an ihrem äusseren Umfang eine Verzahnung 11 auf, die mit dem Motorantrieb 6 aussen am Ventilkörper 2 wirkverbunden ist. Der Motorantrieb 6 umfasst vorzugsweise einen Elektromotor 12 mit einem Getriebe 13. Das Getriebe 13 befindet sich in der Darstellung im schraffierten Bereich des Motorantriebs 6 in der Zone mit dem etwas geringeren Durchmesser. Aus dem Getriebe 13 heraus führt eine Antriebswelle 14, auf welcher ein Antriebsrad 15 angebracht ist. Dieses ist hier als Zahnrad ausgebildet und greift in die Verzahnung 11 am äusseren Umfang der axial drehbaren Hülse 10 ein, und ist auf diese Weise wirkverbunden. An der Stirnseite der Antriebswelle 14 ist beim dargestellten Beispiel eine von aussen sichtbare mechanische Stellungsanzeige 24 angebracht. Zusätzlich zu den elektronischen Daten von der Ansteuerung des Motorantriebs 6 kann hier die Ventilstellung indirekt abgelesen werden.

Um den Austritt von Fluiden bzw. Flüssigkeit aus dem Durchgang des Ventilkörpers 2 in den Raum beim Antriebsrad 15 zu vermeiden, ist die axial drehbare Hülse 10 im Ventilkörper 2 an ihrem äusseren Umfang bevorzugt und wie abgebildet mit Dichtungen 22 versehen. Diese sind ringförmig, und es handelt sich dabei vorzugsweise um Gleitringdichtungen. Wie dargestellt ist in dieser Ausführungsform des erfindungsgemässen, motorisch angetriebenen Axial-Stromregelventils 1 die axial drehbare Hülse 10 nicht direkt gegen die Innenwand des Ventilkörpers 2 abgedichtet, sondern gegen eine fest in den Ventilkörper 2 eingepasste Hülse 23, in welcher neben der axial drehbaren Hülse 10 auch die beiden Scheiben 8,9 des Durchfluss-Regelteils 5 untergebracht sind.

Überdies sind in Figur 3 optionale Sensoren 16 eingezeichnet, nämlich ein Temperatursensor 16,18 und ein Durchflusssensor 16,17. Der Durchflusssensor 17 ist dabei wie abgebildet bevorzugt ein Turbinen-Durchflussmesser. Seine Drehzahl wird bevorzugt von einem eingebauten Hall-Element (Hall-Effekt-Sensor) erfasst.

Des Weiteren ist in der Figur 3 eine Printplatte 25 bezeichnet. Die englische Abkürzung PCB («printed circuit board») für eine Printplatte ist wohlbekannt. Die Printplatte 25 ist im Schaltgehäuse 7 angeordnet und umfasst die Ventil-interne Elektronik. Dazu gehören auch die elektrischen Kontakte auf der Printplatte 25 für die Schnittstellen-Anschlüsse 21, sowie Anbindungsstellen von der Unterseite der Printplatte 25 ganz links in der Abbildung hinunter zum Temperatursensor 16,18 und einem zum Durchflusssensor 16,17 hinunterragenden Hall-Element. Nur in der Figur 3 ist überdies eine auf der Printplatte 25 angeordnete optionale Anzeige 26 sichtbar. Diese Anzeige 26 kann eine LED-Betriebsanzeige und/oder ein Display zum Anzeigen von Kurzinformationen umfassen. Um die Anzeige 26 ablesen zu können, würde man den Deckel des Schaltgehäuses 7 zumindest an der betreffenden Stelle wenigstens halbtransparent oder transparent ausführen.

Die Figur 4 entspricht der Figur 3, mit dem Unterschied, dass das motorisch angetriebene Axial-Stromregelventil 1 in der Figur 4 einen zusätzlichen Sensor-Einbauort 16,19,20 zeigt (analog zu Figur 2), der z.B. für einen Drucksensor 19 und/oder einen Hygienesensor 20 geeignet ist. Die übrigen Details entsprechen der Figur 3 und sind deshalb in der Figur 4 nicht nochmals beschriftet.

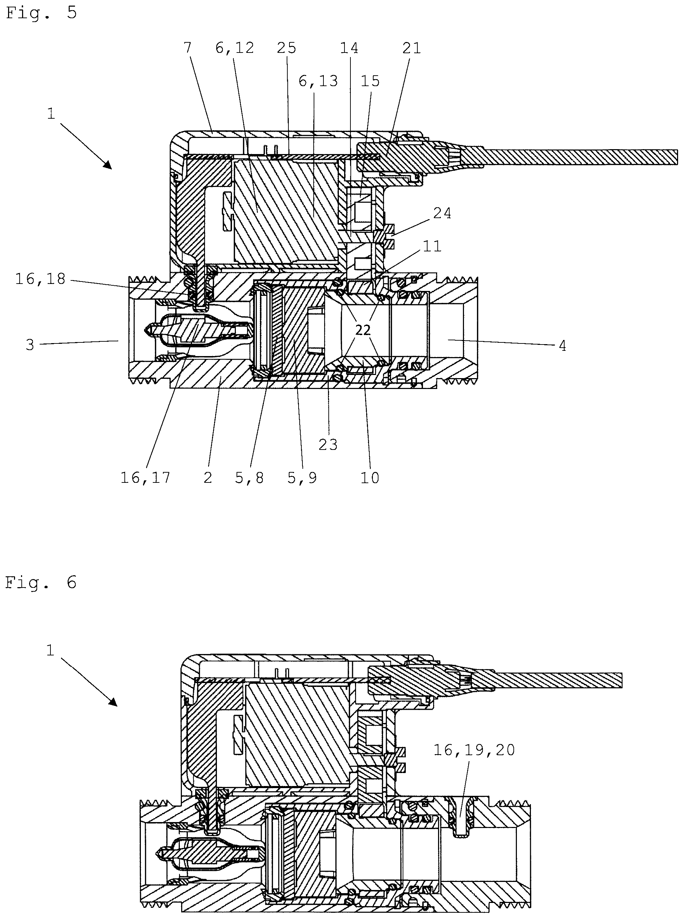

Die Figur 5 entspricht der Figur 3, wobei aber in Figur 5 ein axialer Längsschnitt dargestellt ist. Gewisse Details sind im Längsschnitt noch besser erkennbar. Die Erläuterungen zu den einzelnen Merkmalen entsprechen denjenigen von Figur 3.

Die Figur 6 entspricht der Figur 5, mit dem Unterschied, dass das motorisch angetriebene Axial-Stromregelventil 1 in der Figur 6 einen zusätzlichen Sensor-Einbauort 16,19,20 zeigt (analog zu den Figuren 2 und 4), der beispielsweise für einen Drucksensor 19 und/oder einen Hygienesensor 20 geeignet ist. Die übrigen Details entsprechen der Figur 5 und sind deshalb in der Figur 6 nicht nochmals beschriftet.

Ein zusätzlicher Drucksensor 19 könnte im Zusammenhang mit der möglichen Verwendung eines erfindungsgemässen, motorisch angetriebenen Axial-Stromregelventils zur Leckage-Überwachung eingesetzt werden. Des Weiteren könnten zur Leckage-Überwachung auch separate Feuchtigkeitssensoren in Ergänzung zu den im erfindungsgemässen Axial-Stromregelventil eingebauten Sensoren verwendet und mit der genannten Kontrolleinheit verbunden bzw. an einen Schnittstellen-Anschluss 21 angeschlossen werden.

An dieser Stelle soll darauf hingewiesen werden, dass beliebige Kombinationen der beschriebenen und/oder in den Figuren gezeigten Merkmale zum Umfang der vorliegenden Erfindung gehören, solange die Kombinationen den beigefügten Ansprüchen entsprechen.

Wie der Beschreibung und den Erläuterungen zu den Figuren zu entnehmen ist,wird mit der vorliegenden Erfindung eine vorteilhafte und vielseitig verwendbare alternative Lösung für ein motorisch angetriebenes Axial-Stromregelventil zur Verfügung gestellt.

### Bezugszeichenliste

Gleiche Bezugszeichen in den Figuren deuten auf entsprechende Merkmale hin, auch wenn in der Beschreibung der einzelnen Figuren nicht in jedem Fall ausdrücklich darauf Bezug genommen wird.
- 1: motorisch angetriebenes Axial-Stromregelventil
- 2: Ventilkörper
- 3: Einlass
- 4: Auslass
- 5: Durchfluss-Regelteil
- 6: Motorantrieb
- 7: Schaltgehäuse
- 8: Statorscheibe des Durchfluss-Regelteils 5
- 9: drehbare Scheibe des Durchfluss-Regelteils 5
- 10: axial drehbare Hülse
- 11: Verzahnung am äusseren Umfang der axial drehbaren Hülse 10
- 12: Elektromotor des Motorantriebs 6
- 13: Getriebe des Motorantriebs 6
- 14: Antriebswelle des Getriebes 13
- 15: Antriebsrad auf der Antriebswelle 14
- 16: Sensor
- 17: Durchflusssensor
- 18: Temperatursensor
- 19: Drucksensor
- 20: Hygienesensor
- 21: Schnittstellen-Anschluss
- 22: Dichtung, Gleitringdichtung
- 23: fest eingepasste Hülse im Ventilkörper 2
- 24: mechanische Stellungsanzeige der Antriebswelle 14
- 25: Printplatte
- 26: Anzeige auf der Printplatte 25

## Patentansprüche

1. Motorisch angetriebenes Axial-Stromregelventil (1) umfassend einen Ventilkörper (2) mit einem Einlass (3) und einem gegenüberliegenden Auslass (4) und einem dazwischen liegenden Durchgang mit im Wesentlichen axialer Ausrichtung zum Einlass (3) und zum Auslass (4) sowie ein im Durchgang angeordnetes Durchfluss-Regelteil (5) mit Wirkverbindung zu einem zum Ventil gehörenden Motorantrieb (6) in einem am Ventilkörper (2) anliegenden zum Ventil gehörenden Schaltgehäuse (7), wobei das Durchfluss-Regelteil (5) durch zwei radial angeordnete und aufeinander liegende Scheiben (8,9) mit je mindestens einer Durchlassöffnung gebildet wird, von denen die eine Scheibe eine im Ventilkörper (2) fest angeordnete Statorscheibe (8) ist und die andere Scheibe (9) axial drehbar auf der Statorscheibe (8) liegt, und die drehbare Scheibe (9) mit einer im Durchgang axial angeordneten, in ihrem Hohlraum durchströmbaren und axial drehbaren Hülse (10) im Eingriff steht, wobei diese Hülse (10) an ihrem äusseren Umfang mit dem Motorantrieb (6) wirkverbunden ist, wobei der Motorantrieb (6) einen Elektromotor (12) mit einem Getriebe (13) und einer Antriebswelle (14) umfasst, und auf der Antriebswelle (14) ein Antriebsrad (15) sitzt, das mit dem äusseren Umfang der axial drehbaren Hülse (10) wirkverbunden ist, wobei das Antriebsrad (15) als Zahnrad ausgebildet ist, **dadurch gekennzeichnet, dass** die axial drehbare Hülse (10) an ihrem äusseren Umfang eine Verzahnung (11) aufweist, wobei das als Zahnrad ausgebildete Antriebsrad (15) in die Verzahnung (11) eingreift und so wirkverbunden ist mit der axial drehbaren Hülse (10).

2. Motorisch angetriebenes Axial-Stromregelventil (1) nach Anspruch 1, **dadurch gekennzeichnet, dass** der Elektromotor (12) ein Schrittmotor oder ein Gleichstrommotor ist.

3. Motorisch angetriebenes Axial-Stromregelventil (1) nach einem der vorhergehenden Ansprüche, **dadurch gekennzeichnet, dass** mindestens eine der zwei radial angeordneten Scheiben (8,9) ein Material umfasst, das ausgewählt ist aus der Gruppe bestehend aus Keramik, Metall und technischem Kunststoff.

4. Motorisch angetriebenes Axial-Stromregelventil (1) nach einem der vorhergehenden Ansprüche, **dadurch gekennzeichnet, dass** die axial drehbare Hülse (10) im Ventilkörper (2) an ihrem äusseren Umfang mit Dichtungen (22) versehen ist.

5. Motorisch angetriebenes Axial-Stromregelventil (1) nach einem der vorhergehenden Ansprüche, **dadurch gekennzeichnet, dass** der Einlass (3) auf der Seite der Statorscheibe (8) und der Auslass (4) auf der Seite der axial drehbaren Hülse (10) ist.

6. Motorisch angetriebenes Axial-Stromregelventil (1) nach einem der vorhergehenden Ansprüche, **dadurch gekennzeichnet, dass** im Ventilkörper (2) mindestens ein Sensor (16) eingebaut ist.

7. Motorisch angetriebenes Axial-Stromregelventil (1) nach Anspruch 6, **dadurch gekennzeichnet, dass** der mindestens eine Sensor (16) ausgewählt ist aus der Gruppe der Durchflusssensoren (17), Temperatursensoren (18), Drucksensoren (19) und Hygienesensoren (20).

8. Motorisch angetriebenes Axial-Stromregelventil (1) nach Anspruch 7, **dadurch gekennzeichnet, dass** als Durchflusssensor (17) ein Turbinen-Durchflussmesser ausgewählt ist.

9. Motorisch angetriebenes Axial-Stromregelventil (1) nach einem der Ansprüche 7 oder 8, **dadurch gekennzeichnet, dass** Durch-flusssensoren (17) und/oder Temperatursensoren (18) beim Einlass (3) und Drucksensoren (19) und/oder Hygienesensoren (20) beim Auslass (4) des Ventilkörpers (2) eingebaut sind.

10. Motorisch angetriebenes Axial-Stromregelventil (1) nach einem der vorhergehenden Ansprüche, **dadurch gekennzeichnet, dass** am Schaltgehäuse (7) des motorisch angetriebenen Axial-Stromregelventils (1) Schnittstellen-Anschlüsse (21) zur elektrischen Stromversorgung und zur Ansteuerung des Motorantriebs (6) sowie zur Erfassung von Messsignalen von Sensoren (16) und zur Datenübertragung vorhanden sind.

11. Motorisch angetriebenes Axial-Stromregelventil (1) nach Anspruch 10, **dadurch gekennzeichnet, dass** die Schnittstellen-Anschlüsse (21) mit einer Kontrolleinheit zur Steuerung und Datenauswertung verbindbar sind.

12. Verwendung eines motorisch angetriebenen Axial-Stromregelventils (1) nach einem der Ansprüche 1 bis 11 in der Wasserversorgung, in sanitären Anlagen oder in Heizungs- und Kühlsystemen von Gebäuden, als Steuerventil, als Durchfluss-Regulierventil, als Wasserzähler, als Zirkulationsventil, oder als Sicherheits-Absperrventil, letzteres an einem Haus- oder Stockwerk-Wasseranschluss mit Überwachung durch eine Kontrolleinheit auf Vorkommnisse wie ungewöhnlichen Wasserverbrauch oder eventuelle Leckagen.

13. Verwendung nach Anspruch 12, **dadurch gekennzeichnet, dass** für die Überwachung auf Vorkommnisse wie ungewöhnlichen Wasserverbrauch oder eventuelle Leckagen das motorisch angetriebene Axial-Stromregelventil (1) beim Einlass (3) einen Durchflusssensor (17) und beim Auslass (4) einen Drucksensor (19) aufweist.

14. Verwendung nach einem der Ansprüche 12 oder 13, **dadurch gekennzeichnet, dass** bei einem Vorkommnis eine Meldung von der Kontrolleinheit an eine Zentrale oder an eine App eines Benutzers gesendet wird, und bei einer Leckage ein Absperren des Wasseranschlusses durch automatisches Schliessen des motorisch angetriebenen Axial-Stromregelventils (1) erfolgt.

## Claims

1. Motor-driven axial-flow control valve (1), comprising a valve body (2) having an inlet (3) and an opposite outlet (4) and an interposed passage having substantially axial alignment relative to the inlet (3) and to the outlet (4), as well as a flow control part (5) arranged in the passage with operative connection to a motor drive (6) belonging to the valve in a switch housing (7) adjacent to the valve body (2) and belonging to the valve, wherein the flow-control part (5) is formed by two radially arranged discs (8, 9) lying one on top of the other and each having at least one passage opening, of which the one disc is a stator disc (8) permanently arranged in the valve body (2) and the other disc (9) lies axially rotatably on the stator disc (8), and the rotatable disc (9) is in engagement with an axially rotatable sleeve (10) which is arranged axially in the passage and through which flow can pass in the cavity thereof, wherein said sleeve (10) is operatively connected to the motor drive (6) on the outer periphery of said sleeve, wherein the motor drive (6) comprises an electric motor (12) having a gear unit (13) and a drive shaft (14), and a drive wheel (15) which is operatively connected to the outer circumference of the axially rotatable sleeve (10) is seated on the drive shaft (14), wherein the drive wheel (15) is designed as a gearwheel, **characterized in that** the axially rotatable sleeve (10) has a toothing (11) on its outer circumference, wherein the drive wheel (15) designed as a gearwheel engages in the toothing (11) and is thus operatively connected to the axially rotatable sleeve (10).

2. Motor-driven axial-flow control valve (1) according to claim 1, **characterized in that** the electric motor (12) is a stepper motor or a DC motor.

3. Motor-driven axial-flow control valve (1) according to one of the preceding claims, **characterized in that** at least one of the two radially arranged discs (8, 9) comprises a material selected from the group consisting of ceramic, metal and engineering plastic.

4. Motor-driven axial-flow control valve (1) according to one of the preceding claims, **characterized in that** the axially rotatable sleeve (10) in the valve body (2) is provided with seals (22) on its outer circumference.

5. Motor-driven axial-flow control valve (1) according to one of the preceding claims, **characterized in that** the inlet (3) is on the side of the stator disc (8) and the outlet (4) is on the side of the axially rotatable sleeve (10).

6. Motor-driven axial-flow control valve (1) according to one of the preceding claims, **characterized in that** at least one sensor (16) is installed in the valve body (2).

7. Motor-driven axial-flow control valve (1) according to claim 6, **characterized in that** the at least one sensor (16) is selected from the group of flow sensors (17), temperature sensors (18), pressure sensors (19) and hygiene sensors (20).

8. Motor-driven axial-flow control valve (1) according to claim 7, **characterized in that** a turbine flow meter is selected as flow sensor (17).

9. Motor-driven axial-flow control valve (1) according to one of claims 7 or 8, **characterized in that** flow sensors (17) and/or temperature sensors (18) are installed at the inlet (3) and pressure sensors (19) and/or hygiene sensors (20) are installed at the outlet (4) of the valve body (2).

10. Motor-driven axial-flow control valve (1) according to one of the preceding claims, **characterized in that** interface connections (21) are provided on the switch housing (7) of the motor-driven axial-flow control valve (1) for the electrical power supply and for controlling the motor drive (6) as well as for detecting measurement signals from sensors (16) and for data transmission.

11. Motor-driven axial-flow control valve (1) according to claim 10, **characterized in that** the interface connections (21) can be connected to a control unit for control and data evaluation.

12. Use of a motor-driven axial-flow control valve (1) according to one of claims 1 to 11 in the water supply, in sanitary installations or in heating and cooling systems of buildings, as a control valve, as a flow regulating valve, as a water meter, as a circulation valve, or as a safety shut-off valve, the latter at a house or storey water connection with monitoring by a control unit for incidents such as unusual water consumption or possible leakages.

13. Use according to claim 12, **characterized in that** for monitoring for incidents such as unusual water consumption or possible leakages, the motor-driven axial-flow control valve (1) has a flow sensor (17) at the inlet (3) and a pressure sensor (19) at the outlet (4).

14. Use according to one of claims 12 or 13, **characterized in that** in the event of an incident, a message is sent from the control unit to a control center or to an app of a user, and in the event of a leakage, the water connection is shut off by automatic closing of the motor-driven axial-flow control valve (1).

## Revendications

1. Régulateur de débit axial entraîné par moteur (1) comprenant un corps de soupape (2) équipé d'une admission (3) et d'une évacuation (4) opposée, ainsi que d'un passage situé entre celles-ci et présentant une orientation sensiblement axiale par rapport à l'admission (3) et à l'évacuation (4), ainsi qu'une pièce de régulation de débit (5) qui est disposée dans le passage et qui coopère avec un entraînement à moteur (6) appartenant au régulateur dans un carter de boîte de vitesses (7) appartenant au régulateur et agencé sur le corps de soupape (2), la pièce de régulation de débit (5) étant formée par deux plaques (8, 9) superposées de manière radiale et comportant respectivement au moins une ouverture de passage, une des plaques étant une plaque statorique (8) agencée de façon fixe dans le corps de soupape (2) tandis que l'autre plaque (9) repose sur la plaque statorique (8) de façon à pouvoir effectuer un mouvement de rotation axial, et la plaque rotative (9) étant en prise avec une douille (10) agencée de manière axiale dans le passage, dont l'espace creux peut être parcouru et qui peut effectuer un mouvement de rotation axial, cette douille (10) étant en liaison active avec l'entraînement à moteur (6) au niveau de sa circonférence extérieure, l'entraînement à moteur (6) comprenant un moteur électrique (12) avec une transmission (13) et un arbre d'entraînement (14), une roue d'entraînement (15) en liaison active avec la circonférence extérieure de la douille mobile en rotation axiale (10) reposant sur l'arbre d'entraînement (14), la roue d'entraînement (15) étant réalisée sous la forme d'une roue dentée, caractérisé que la douille mobile en rotation axiale (10) présente, au niveau de sa circonférence extérieure, une denture (11), la roue d'entraînement (15) réalisée sous la forme d'une roue dentée venant s'engager dans la denture (11) et coopérant avec la douille mobile en rotation axiale (10).

2. Régulateur de débit axial entraîné par moteur (1) selon la revendication 1, **caractérisé en ce que** le moteur électrique (12) est un moteur pas-à-pas ou un moteur à courant continu.

3. Régulateur de débit axial entraîné par moteur (1) selon l'une des revendications précédentes, **caractérisé en ce qu'**au moins une des deux plaques agencées radialement (8, 9) comprend un matériau qui est choisi à partir du groupe composé de céramique, de métal et de matière plastique technique.

4. Régulateur de débit axial entraîné par moteur (1) selon l'une des revendications précédentes, **caractérisé en ce que** la douille mobile en rotation axiale (10) dans le corps de soupape (2) est munie sur sa circonférence extérieure de joints d'étanchéité (22).

5. Régulateur de débit axial entraîné par moteur (1) selon l'une des revendications précédentes, **caractérisé en ce que** l'admission (3) se trouve du côté de la plaque statorique (8) et l'évacuation (4) du côté de la douille mobile en rotation axiale (10).

6. Régulateur de débit axial entraîné par moteur (1) selon l'une des revendications précédentes, **caractérisé en ce qu'**il est installé dans le corps de soupape (2) au moins un capteur (16).

7. Régulateur de débit axial entraîné par moteur (1) selon la revendication 6, **caractérisé en ce que** le au moins un capteur (16) est choisi à partir du groupe composé de capteurs de débit (17), de capteurs de température (18), de capteurs de pression (19) et de capteurs d'hygiène (20).

8. Régulateur de débit axial entraîné par moteur (1) selon la revendication 7, **caractérisé en ce qu'**il est choisi comme capteur de débit (17) un capteur de débit à turbine.

9. Régulateur de débit axial entraîné par moteur (1) selon l'une des revendications 7 ou 8, **caractérisé en ce qu'**il est installé des capteurs de débit (17) et/ou des capteurs de température (18) au niveau de l'admission (3), et des capteurs de pression (19) et/ou des capteurs d'hygiène (20) au niveau de l'évacuation (4) du corps de soupape (2).

10. Régulateur de débit axial entraîné par moteur (1) selon l'une des revendications précédentes, **caractérisé en ce que**, au niveau du carter de boîte de vitesses (7) du régulateur de débit axial entraîné par moteur (1), on trouve des raccordements d'interfaces (21) pour l'alimentation électrique et pour la commande de l'entraînement à moteur (6), ainsi que pour l'enregistrement de signaux de mesure de capteurs (16) et pour la transmission de données.

11. Régulateur de débit axial entraîné par moteur (1) selon la revendication 10, **caractérisé en ce que** les raccordements d'interfaces (21) peuvent être raccordés à une unité de contrôle pour commander et analyser les données.

12. Utilisation d'un régulateur de débit axial entraîné par moteur (1) selon l'une des revendications 1 à 11 dans l'approvisionnement en eau, dans les installations sanitaires ou dans les systèmes de chauffage et de refroidissement de bâtiments, comme vanne de commande, comme vanne de régulation de débit, comme compteur d'eau, comme vanne de circulation, ou comme vanne d'arrêt de sécurité, la dernière option notamment au niveau d'un raccordement d'eau à l'étage avec surveillance par le biais d'une unité de contrôle des incidents, comme une consommation d'eau inhabituelle ou des fuites éventuelles.

13. Utilisation selon la revendication 12, **caractérisée en ce que**, pour la surveillance des incidents, comme une consommation d'eau inhabituelle ou des fuites éventuelles, le régulateur de débit axial entraîné par moteur (1) présente au niveau de l'admission (3) un capteur de débit (17) et au niveau de l'évacuation (4) un capteur de pression (19).

14. Utilisation selon l'une des revendications 12 ou 13, **caractérisée en ce qu'**en cas d'incident, un message est envoyé depuis l'unité de contrôle à une centrale ou à une application d'un utilisateur, et en cas de fuite, il se produit une fermeture de l'alimentation en eau par le biais d'une fermeture automatique du régulateur de débit axial entraîné par moteur (1).
